# EUROPEAN PATENT APPLICATION

(11) **EP 4 708 940 A2**
(43) Date of publication of application: **11.03.2026**
(21) Application number: 26153889.6
(22) Date of filing: 25.02.2016
(51) Int. Cl.: H04W 8/22

(54) **COMMUNICATION SYSTEM, NETWORK DEVICE, BASE STATION, MOBILE STATION, FREQUENCY BAND CONTROL METHOD, AND NON-TRANSITORY COMPUTER READABLE MEDIUM**

(30) Priority: 11.03.2015 JP 2015048210
(62) Divisional of application: 21173421.5
(71) Applicant: NEC Corporation, 108-8001 Tokyo (JP)
(72) Inventor: SUZUKI, Naoaki, Minato-ku, 108-8001 (JP); WATANABE, Kazuo, Minato-ku, 108-8001 (JP); FUKUI, Keiji, Minato-ku, 108-8001 (JP); TAMURA, Toshiyuki, Minato-ku, 108-8001 (JP)
(74) Representative: Mathys & Squire

(57) **Abstract**

An exemplary object is to provide a communication system that can flexibly determine whether carrier aggregation is applicable or not per UE. The communication system according to an exemplary embodiment of the invention includes a base station (10) that wirelessly communicates with a mobile station (20) by using at least one of a first frequency band and a second frequency band, the mobile station (20) being located concurrently in a cell (100) using a first frequency band and a cell (110) using a second frequency band, and a network device (30) that sends, to the base station (10), information to be used for determining a frequency band to be used.

## Description

### Technical Field

The present invention relates to a communication system, a network device, a base station, a mobile station, a frequency band control method and a program and, particularly, relates to a communication system, a network device, a base station, a frequency band control method, a frequency band determination method and a program using a plurality of frequency bands.

### Background Art

With the proliferation of smartphones, services using a large volume of data such as video viewing are being provided to users today. In order to send a large volume of data to smartphones at high speed, carrier aggregation is used. The carrier aggregation is the communication standard defined in the 3GPP (3rd Generation Partnership project) TS36.101 V12.6.0, clause 5.6A (2014-12). The carrier aggregation is a technique to achieve high-speed communications by ensuring a wide band using frequencies in different frequency bands such as, for example, the 800MHz frequency band and the 2GHz frequency band.

Non Patent Literature 1 discloses the carrier aggregation between a UE (User Equipment) and an eNB (evolved NodeB). The UE is used as a general term for mobile stations in the 3GPP. The eNB is a base station that uses LTE (Long Term Evolution), which is the wireless communication standard defined in the 3GPP.

Patent Literature 1 discloses controlling the carrier aggregation operation by exchanging information between a terminal device and a base station device.

### Citation List

### Patent Literature

PTL1: Japanese Unexamined Patent Application Publication No. 2013-229943

### Non Patent Literature

NPL1: 3GPP TS 36.300 V12.4.0 (2014-12) 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2, clauses 5.5, 7.5

### (Release 12)

### Summary of Invention

### Technical Problem

Non Patent Literature 1 and Patent Literature 1 describe that an eNB or a base station device (hereinafter referred to collectively as "eNB etc.") determines a frequency band or the like to be used in the carrier aggregation. Thus, in the case where a UE or a terminal device (hereinafter referred to collectively as "UE etc.") is a device to which the carrier aggregation is applicable, the eNB etc. uses the carrier aggregation in communication with the UE etc. However, the eNB etc. determines whether or not to apply the carrier aggregation only by using information sent and received to and from the UE etc. Therefore, there is a problem that the carrier aggregation is applied to the UE etc. even when application of the carrier aggregation is not unauthorized under subscriber contract conditions, usage conditions and the like of that UE etc..

An exemplary object of the present invention is to provide a communication system, a network device, a base station, a mobile station, a frequency band control method and a program that can more appropriately determine whether the carrier aggregation is applicable or not per UE.

### Solution to Problem

A communication system according to a first exemplary aspect of the present invention includes a base station that wirelessly communicates with a mobile station by using at least one of a first frequency band and a second frequency band, the mobile station being located concurrently in a first cell using the first frequency band and a second cell using the second frequency band; and a network device that sends, to the base station, information to be used for determining a frequency band to be used in wireless communications with the mobile station.

A network device according to a second exemplary aspect of the present invention includes a communication unit for sending, to a base station that wirelessly communicates with a mobile station by using at least one of a first frequency band and a second frequency band, the mobile station being located concurrently in a first cell using the first frequency band and a second cell using the second frequency band, information to be used for determining a frequency band to be used in wireless communications with the mobile station.

A base station according to a third exemplary aspect of the present invention is a base station that forms a first cell using a first frequency band and a second cell using a second frequency band, the base station including a determination unit for determining a frequency band to be used in communication with a mobile station located concurrently in the first cell and the second cell by using information, sent from a network device, to be used for determining a frequency band to be used in wireless communications with the mobile station.

A mobile station according to a fourth exemplary aspect of the present invention is a mobile station that is located concurrently in a first cell using a first frequency band and a second cell using a second frequency band and wirelessly communicates with a base station by using at least one of the first frequency band and the second frequency band, wherein the mobile station is configured to receive information to be used for determining a frequency band to be used in wireless communications with the base station and determine whether or not to use the first frequency band and the second frequency band by using the received information.

A frequency band control method according to a fifth exemplary aspect of the present invention includes sending, to a base station that wirelessly communicates with a mobile station by using at least one of a first frequency band and a second frequency band, the mobile station being located concurrently in a first cell using the first frequency band and a second cell using the second frequency band, information to be used for determining a frequency band to be used in wireless communications with the mobile station.

A frequency band determination method according to a sixth exemplary aspect of the present invention is a frequency band determination method used in a base station that forms a first cell using a first frequency band and a second cell using a second frequency band, the method including determining a frequency band to be used in communication with a mobile station located concurrently in the first cell and the second cell by using information, sent from a network device, to be used for determining a frequency band to be used in wireless communications with the mobile station.

A program according to a seventh exemplary aspect of the present invention includes sending, to a base station that wirelessly communicates with a mobile station by using at least one of a first frequency band and a second frequency band, the mobile station being located concurrently in a first cell using the first frequency band and a second cell using the second frequency band, information to be used for determining a frequency band to be used in wireless communications with the mobile station.

### Advantageous Effects of Invention

According to the exemplary aspects of the present invention described above, it is possible to provide a communication system, a network device, a base station, a mobile station, a frequency band control method and a program that can more appropriately determine whether the carrier aggregation is applicable or not per UE.

### Brief Description of Drawings

Fig. 1 is a block diagram of a communication system according to a first exemplary embodiment.
Fig. 2 is a block diagram of a communication system according to a second exemplary embodiment.
Fig. 3 is a block diagram of an MME according to the second exemplary embodiment.
Fig. 4 is a block diagram of an eNB according to the second exemplary embodiment.
Fig. 5 is a view showing a flow of an Attach process according to the second exemplary embodiment.
Fig. 6 is a view illustrating an Initial Context Setup Request message according to the second exemplary embodiment.
Fig. 7 is a view illustrating an RRC Connection Reconfiguration/ NAS:Attach Accept message according to the second exemplary embodiment.
Fig. 8 is a view showing a flow of a UE triggered Service Request process according to a third exemplary embodiment.
Fig. 9 is a view showing a flow of a Network triggered Service Request process according to the third exemplary embodiment.
Fig. 10 is a block diagram of a communication system according to a fourth exemplary embodiment.
Fig. 11 is a view showing a flow of an Attach process according to a fifth exemplary embodiment.
Fig. 12 is a block diagram of a UE according to each exemplary embodiment.

### Description of Embodiments

### (First Exemplary Embodiment)

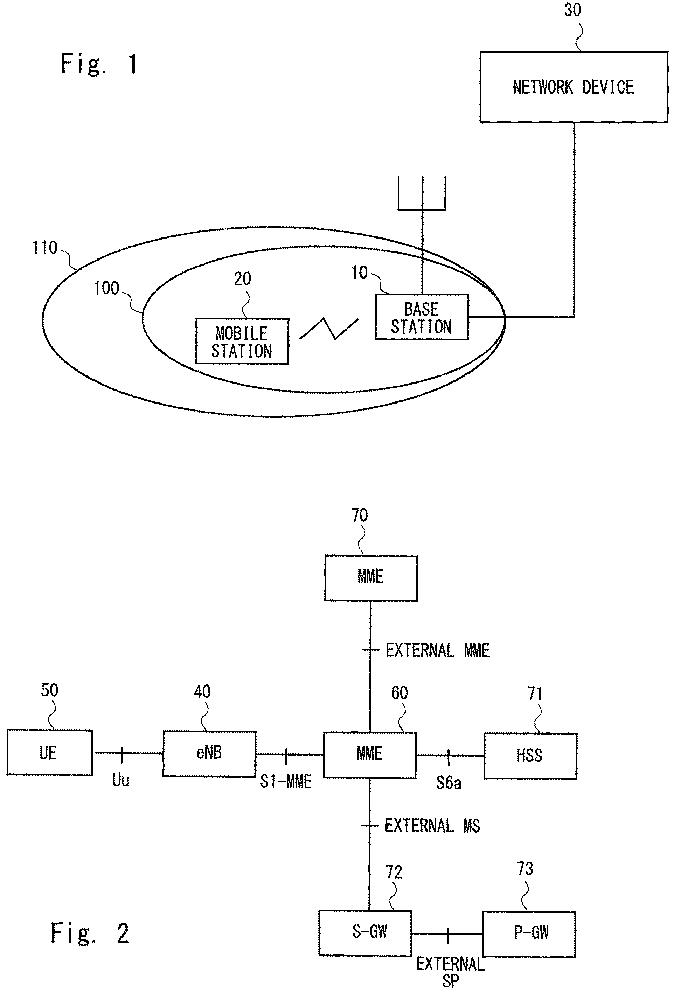

Exemplary embodiments of the present invention are described hereinafter with reference to the drawings. First, a configuration example of a communication system according to a first exemplary embodiment of the present invention is described hereinafter with reference to Fig. 1. The communication system in Fig. 1 includes a base station 10, a mobile station (mobile terminal) 20, and a network device 30. The base station 10 uses a plurality of frequency bands and forms a cell with a different communication range for each of the frequency bands. For example, the base station 10 forms a cell 100 and a cell 110. A frequency band (frequency band A) that is used in the cell 100 is different from a frequency band (frequency band B) that is used in the cell 110.

It is assumed that the mobile station 20 is located concurrently in the cell 100 and the cell 110. In other words, it is assumed that the mobile station 20 is located in the area where the cell 100 and the cell 110 overlap. In this case, the base station 10 wirelessly communicates with the mobile station 20. For example, the base station 10 may communicate with the mobile station 20 by using LTE, which is the communication standard defined in the 3GPP, or may communicate with the mobile station 20 by using another communication standard.

The network device 30 sends, to the base station 10, information to be used for determining the frequency band to be used in wireless communications with the mobile station 20. The information to be used for determining the frequency band to be used may be, for example, information indicating whether both the frequency band A and the frequency band B can be used, only the frequency band A can be used, or only the frequency band B can be used when communicating with the mobile station 20.

As described above, with using the communication system in Fig. 1, the base station 10 can determine whether or not to use a plurality of frequency bands in wireless communications with the mobile station 20 by using the information sent from the network device 30. Therefore, a mobile telecommunications carrier that manages the base station 10 and the network device 30 can determine whether or not to perform communications using a plurality of frequency bands for each mobile station 20; that is, whether or not to apply the carrier aggregation per mobile station 20. A mobile telecommunications carrier can thereby appropriately determine whether the carrier aggregation can be applied or not per mobile station 20.

### (Second Exemplary Embodiment)

A configuration example of a communication system according to a second exemplary embodiment of the present invention is described hereinafter with reference to Fig. 2. The communication system in Fig. 2 includes an eNB 40, an UE 50, an MME (Mobility Management Entity) 60, an MME 70, an HSS (Home Subscriber Server) 71, an S-GW (Serving-Gateway) 72, and a P-GW (Packet Data Network Gateway) 73. The eNB 40 is connected to the UE 50 through a Uu interface.

The MME 60 accommodates the eNB 40 through an S1-MME interface. Further, the MME 70 may accommodate another eNB which is different from the eNB 40. The MME 60 and the MME 70 perform UE mobility management, authentication, user data transfer path setting and the like. Further, the MME 60 is connected to the MME 70 through an external MME interface.

The HSS 71 manages subscriber information of the UE 50. For example, the subscriber information includes static information such as contract information between the UE 50 and a mobile telecommunications carrier and dynamic information such as position information of the UE 50. The static information is information that is not frequently modified, and the dynamic information is information that is more frequently modified compared with the static information. The HSS 71 sends the subscriber information about the UE 50 to the MME 60 through an S6a interface when the MME 60 performs, for example, authentication of the UE 50.

The S-GW 72 performs transmission of user data. The S-GW 72 is connected to the MME 60 through an external MS interface, and sends and receives control data. The P-GW 73, like the S-GW 72, performs transmission of user data. Further, the P-GW 73 performs allocation of an IP address or the like for the UE 50. The P-GW 73 is connected to the S-GW 72 through an external SP interface, and sends and receives control data. The P-GW 73 may be connected to an external network, the Internet or the like (not shown) through another interface.

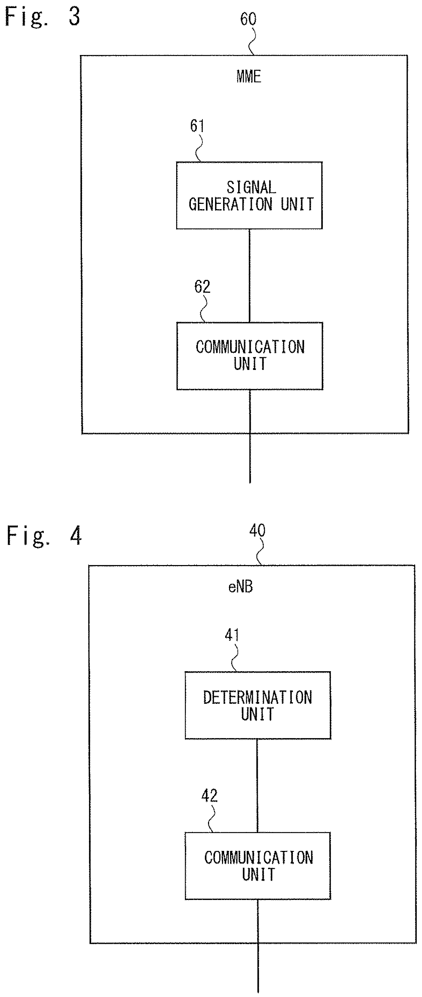

A configuration example of the MME 60 according to the second exemplary embodiment of the present invention is described hereinafter with reference to Fig. 3. The MME 60 includes a signal generation unit 61 and a communication unit (sending and receiving unit) 62. The signal generation unit 61 generates a signal that contains information about whether the eNB 40 applies the carrier aggregation or not in wireless communications with the UE 50. To be specific, the MME 60 acquires the subscriber information about the UE 50 from the HSS 71 through the communication unit 62. The subscriber information about the UE 50 contains information about whether or not to apply the carrier aggregation in wireless communications with the UE 50. The signal generation unit 61 sends the generated signal to the eNB 40 through the communication unit 62.

The information about whether or not to apply the carrier aggregation which is contained in the subscriber information may be, for example, contract information about whether the UE 50 has applied for using the carrier aggregation or not. Further, the information about whether or not to apply the carrier aggregation which is contained in the subscriber information may be for example, information about the communication traffic capacity available for the UE 50 according to the contract. When the available communication traffic capacity according to the contract of the UE 50 is a large capacity that exceeds a predetermined threshold, the eNB 40 may determine to apply the carrier aggregation in communication with the UE 50, and when it is a capacity that falls below a predetermined threshold, the eNB 40 may determine not to apply the carrier aggregation in communication with the UE 50.

Further, the information about whether or not to apply the carrier aggregation which is contained in the subscriber information may be information about a service which the UE 50 has a contract for. For example, the eNB 40 may determine to apply the carrier aggregation in communication with the UE 50 when high-capacity communications are required for a service which the UE 50 has a contract for. Further, the eNB 40 may determine not to apply the carrier aggregation when the UE 50 subscribes to a voice service only. Furthermore, when the UE 50 subscribes to a premium contract or the like at a higher fee than that of a basic contract, the eNB 40 may allocate a frequency that is more suitable for high-speed communications and high-capacity communications as the frequency band to be allocated to the carrier aggregation. Further, the information about whether or not to apply the carrier aggregation which is contained in the subscriber information may be information that combines pieces of subscriber information related to the UE 50 managed by the HSS 71.

Further, the information about whether or not to apply the carrier aggregation which is contained in the subscriber information may be information about whether or not to subscribe to MVNO (Mobile Virtual Network Operator). For example, the eNB 40 may determine not to apply the carrier aggregation when the UE 50 subscribes to the MVNO, and the eNB 40 may determine to apply the carrier aggregation when the UE 50 subscribes to the MVNO.

Further, the information about whether or not to apply the carrier aggregation which is contained in the subscriber information may be information about whether the UE 50 is under roaming or not. For example, the eNB 40 may determine not to apply the carrier aggregation when the UE 50 is under roaming. For example, the MME 60 determines to allow roaming of the UE 50 when a roaming-partner HSS, which is in a roaming source, is set, and determines not to allow roaming of the UE 50 when a roaming-partner HSS is not set. Alternatively, the MME 60 determines to allow roaming of the UE 50 when it is set to allow roaming of the UE 50 in the subscriber information, and the MME 60 determines not to allow roaming of the UE 50 when it is not set to allow roaming of the UE 50 in the subscriber information.

A configuration example of the eNB 40 according to a second exemplary embodiment of the present invention is described hereinafter with reference to Fig. 4. The eNB 40 includes a determination unit 41 and a communication unit (sending and receiving unit) 42. The determination unit 41 determines whether or not to apply the carrier aggregation in wireless communications with the UE 50 by using information sent from the MME 60. In other words, the determination unit 41 determines whether or not to apply the carrier aggregation per UE by using information sent from the MME 60.

When the contract information about whether the UE 50 has applied for using the carrier aggregation or not is sent from the MME 60, the determination unit 41 determines whether or not to apply the carrier aggregation to the UE 50 according to the details of the contract information.

The determination unit 41 may previously set a threshold in preparation for the case where information about the communication traffic capacity available for the UE 50 according to the contract is sent from the MME 60. The determination unit 41 may determine whether or not to apply the carrier aggregation to the UE 50 depending on whether the communication traffic capacity available for the UE 50 according to the contract exceeds a preset threshold or not. The determination unit 41 may previously set, for each service, whether it is the service to which the carrier aggregation is applied or not in preparation for the case where information about the service for which the UE 50 has a contract is sent from the MME 60. The determination unit 41 may determine whether or not to apply the carrier aggregation to the UE 50 depending on whether the service to which the carrier aggregation is applied is contained in the information about the service.

Further, when the determination unit 41 determines to apply the carrier aggregation in communication with the UE 50, it may determine the frequency band and the frequency width to be used by the communication unit 42. The determination unit 41 may determine to use the 800MHz frequency band and the 2.4GHz frequency band as the frequency band, for example. When applying the carrier aggregation, the determination unit 41 selects two or more frequency bands from a plurality of frequency bands available for the eNB 40. Further, the determination unit 41 may determine 20MHz or the like as the frequency width. The determination unit 41 may determine the total of frequency widths to be used in a plurality of frequency bands or may determine a frequency width to be used in each frequency band.

The determination unit 41 may previously specify the frequency bands that are available between the eNB 40 and the UE 50 in communication with the UE 50. Alternatively, the determination unit 41 may previously specify the frequency bands that are available between the eNB 40 and the UE 50 according to the place where the UE 50 is located.

The communication unit 42 wirelessly communicates with the UE 50 by using the frequency band and the frequency width specified by the determination unit 41. Further, the communication unit 42 may send and receive data to and from the MME 60 also.

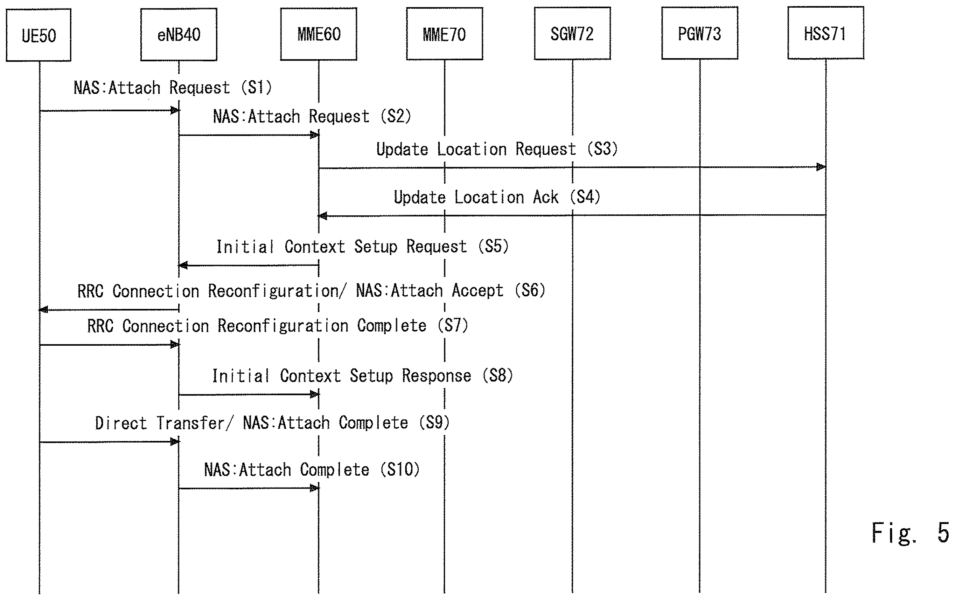

The flow of an Attach process according to the second exemplary embodiment of the present invention is described hereinafter with reference to Fig. 5. First, the UE 50 sends a NAS (Non Access Stratum):Attach Request message to the eNB 40 (S1). The NAS:Attach Request message is sent when the UE 50 transitions from the power-off state to the power-on state, for example. The NAS:Attach Request message is used in the protocol called NAS, which is specified between a UE and a core network device. The core network device is an MME, for example.

Next, the eNB 40 transfers the NAS:Attach Request message sent from the UE 50 to the MME 60 (S2). The MME 60 receives the NAS:Attach Request message sent from the UE 50 and then sends an Update Location Request message to the HSS 71 (S3). The MME 60 sends the Update Location Request message to the HSS 71 in order to acquire subscriber information from the HSS 71. For example, the MME 60 sends the Update Location Request message to the HSS 71 by setting an identifier for identifying the UE 50.

Then, the HSS 71 sends an Update Location Ack message to the MME 60 as a response message to the Update Location Request message (S4). The HSS 71 sends the Update Location Ack message to which the subscriber information of the UE 50 is set to the MME 60.

The subscriber information that is sent from the HSS 71 to the MME 60 may be contract information about whether the UE 50 has applied for using the carrier aggregation or not, contract information about the communication traffic capacity available for the UE 50 according to the contract, or contract information about the service for which the UE 50 has a contract.

Further, the HSS 71 may indicate the frequency band in the case where the eNB 40 uses the carrier aggregation in communication with the UE 50 by using SPID (Subscriber ProfileID for RAT/ frequency priority) indicating the priority of a communication method to be used. For example, the priority of each of communication methods LTE (E-UTRAN), 3G (UTRAN) and 2G (GERAN) is specified by the SPID. The eNB 40 determines a communication method to be used according to the priority specified by the SPID.

The HSS 71 may specify, by the SPID, the use of the communication methods LTE and 3G as the highest priority, for example. By setting the SPID in this manner, the eNB 40 can determine to carry out the carrier aggregation by using the frequency band used in LTE and the frequency band used in 3G when communicating with the UE 50. A combination of various communication methods may be set to the SPID, and, for example, the use of LTE and an LTE communication method may be set as the highest priority. In this case, it is specified to carry out the carrier aggregation by combining two frequency bands that are used in LTE.

Then, the MME 60 extracts information to be used for the eNB 40 to determine whether the carrier aggregation is applicable or not from the subscriber information set to the Update Location Ack message. The MME 60 sets the extracted information to an Initial Context Setup Request message. The MME 60 sends, to the eNB 40, the Initial Context Setup Request message to which the information to be used for the eNB 40 to determine whether the carrier aggregation is applicable or not is set(S5).

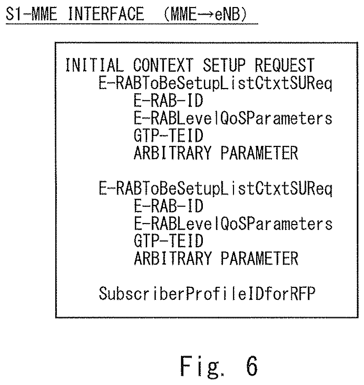

The Initial Context Setup Request message is described hereinafter with reference to Fig. 6. The MME 60 sends the Initial Context Setup Request message to the eNB 40 through the S1-MME interface. The Initial Context Setup Request message indicates a parameter to be set for each bearer that is set in the UE 50. For example, in the case where the UE 50 sets two bearers, two E-RABToBeSetupListCtxtSUReq are set as shown in Fig. 6. E-RAB-ID or the like is set in the E-RABToBeSetupListCtxtSUReq.

The MME 60 may set the information to be used for the eNB 40 to determine whether the carrier aggregation is applicable or not as an arbitrary parameter described for GTP(General Packet Radio Service Tunneling Protocol)-TEID(Tunnel Endpoint Identifier). To be specific, the MME 60 may set the contract information, the information indicated by the SPID or the like as an arbitrary parameter to be set for each bearer.

Referring back to Fig. 5, the eNB 40 receives the Initial Context Setup Request message, and determines whether or not to apply the carrier aggregation in communication with the UE 50. The eNB 40 sends, to the UE 50, an RRC(Radio Resource Control) Connection Reconfiguration/ NAS:Attach Accept message that reflects the determination result as to whether or not to apply the carrier aggregation (S6).

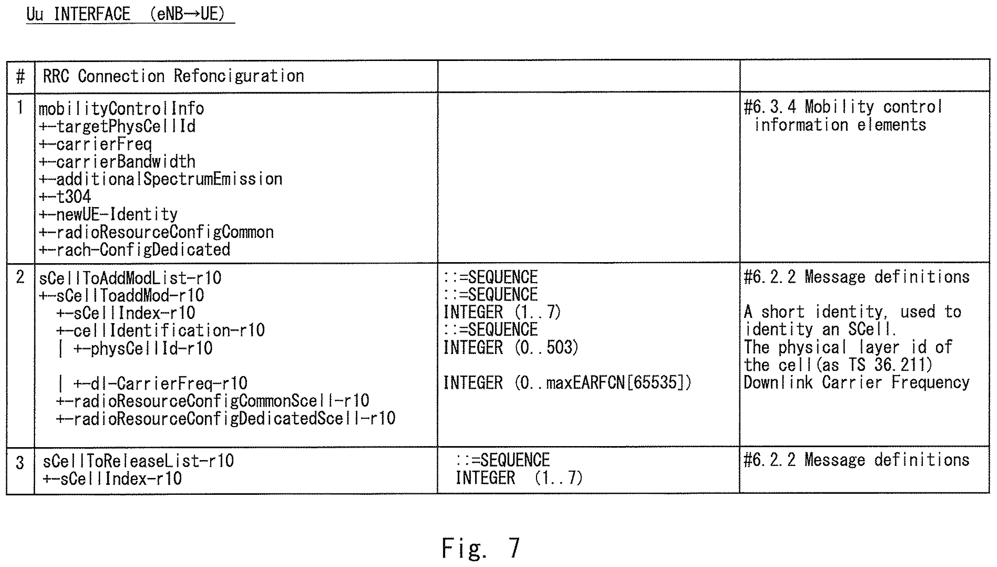

The RRC Connection Reconfiguration/ NAS:Attach Accept message is described hereinafter with reference to Fig. 7. The RRC Connection Reconfiguration/ NAS:Attach Accept message in Fig. 7 indicates that the Primary cell that is set in #1 and the Secondary cell set that is in #2 are specified. For example, the Primary cell may be the cell 100 in Fig. 1, and the Secondary cell may be the cell 110 in Fig. 1. Fig. 7 shows that the eNB 40 sets the Primary cell and the Secondary cell and thereby causes the carrier aggregation to operate in communication with the UE 50. In the case of applying the carrier aggregation using three or more frequency bands in communication with the UE 50, the eNB 40 may set three or more cells.

The eNB 40 specifies carrierFreq in mobilityControlInfo of #1 and thereby specifies the frequency to be used in the Primary cell. Further, the eNB 40 specifies dl-CarrierFreq-r10 in sCellToAddModList-r10 of #2 and thereby specifies the frequency to be used in the Secondary cell. Furthermore, the eNB 40 may specify the frequency width by specifying carrierBandwidth.

The frequency band, the frequency width and the like to be used when the eNB 40 communicates with the UE 50 by using the carrier aggregation may be predetermined between the UE 50 and the eNB 40. For example, after the eNB 40 receives the NAS:Attach Request message in Step S1, it may send a UE Capability Enquiry message to the UE 50 in order to make inquiries about information such as the frequency band and the frequency width to be used in the carrier aggregation. As a response to the UE Capability Enquiry message, the UE 50 may send a UE Capability Information message where the frequency band, the frequency width and the like to be used in the carrier aggregation are specified. It is assumed that sending and receiving of the UE Capability Enquiry message and the UE Capability Information message between the UE 50 and the eNB 40 have completed before the eNB 40 sends the RRC Connection Reconfiguration/ NAS:Attach Accept message in Step S6.

Further, in the case where the eNB 40 determines not to use the carrier aggregation, only #1 indicating the setting of the Primary cell may be set in Fig. 7.

Referring back to Fig. 5, the UE 50 sends an RRC Connection Reconfiguration Complete message to the eNB 40 as a response message to the RRC Connection Reconfiguration/ NAS:Attach Accept message (S7).

Then, the eNB 40 sends an Initial Context Setup Response message to the MME 60 as a response message to the Initial Context Setup Request message (S8). After that, the UE 50 sends a Direct Transfer/ NAS:Attach Complete message to the eNB 40 in order to notify the completion of processing related to Attach Request (S9). The eNB 40 then sends a NAS:Attach Complete message to the MME 60 (S10).

As described above, with using the communication system according to the second exemplary embodiment of the present invention, the MME, which is the core network device, can send, to the eNB 40, the information to be used for determining whether the carrier aggregation is applicable or not. The eNB can determine whether the carrier aggregation is applicable or not per UE by using the information sent from the MME. A mobile telecommunications carrier can thereby flexibly set the carrier aggregation per UE.

### (Third Exemplary Embodiment)

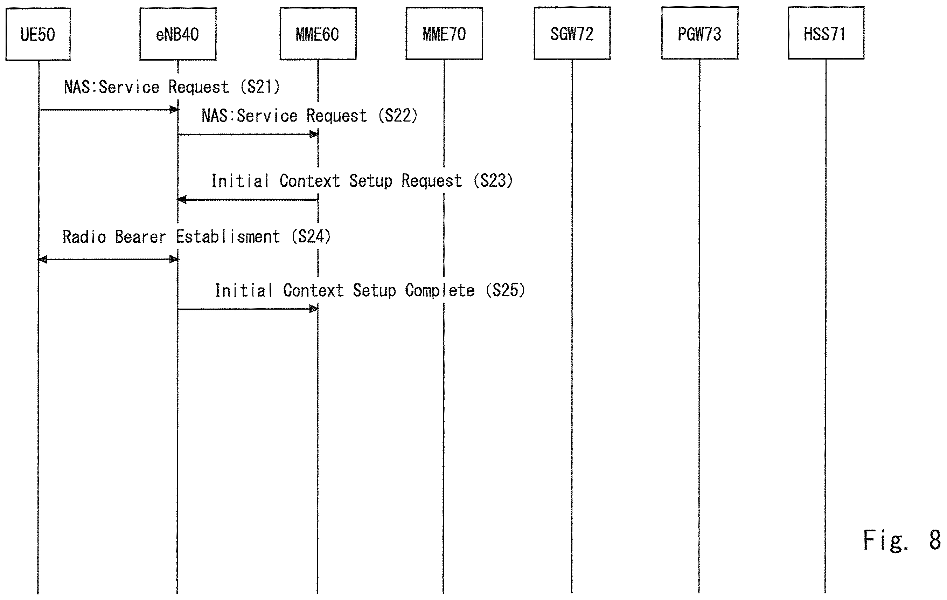

The flow of a UE triggered Service Request process according to a third exemplary embodiment of the present invention is described hereinafter with reference to Fig. 8. A precondition for performing the UE triggered Service Request process is that a bearer is previously set in the UE 50 and radio resources are released after the lapse of a specified period of time. In other words, the UE triggered Service Request process is a process that the UE 50 requests the resetting of a bearer, which is, the activation of a bearer.

First, the UE 50 sends a NAS:Service Request message to the eNB 40 (S21). For example, the NAS:Service Request message is sent to the eNB 40 when an arbitrary operation is performed in the UE 50 in the state where the Attach process of the UE 50 has completed. Next, the eNB 40 transfers the received NAS:Service Request message to the MME 60 (S22).

Then, the MME 60 sends, to the eNB 40, an Initial Context Setup Request message that specifies a bearer to be reset in the UE 50 (S23). The MME 60 specifies the bearer that has been set in the Attach process of the UE 50 as the bearer to be reset, for example. At this time, the MME 60 sets the same information as the information that has been set to the arbitrary parameter in Step S5 of Fig. 5 to the Initial Context Setup Request message in Step S23.

The eNB 40 receives the Initial Context Setup Request message to which the information to be used for determining whether the carrier aggregation is applicable or not is set in Step S23 and then determines whether or not to apply the carrier aggregation in communication with the UE 50.

Then, the eNB 40 establish a radio bearer with the UE 50 (S24). At this time, when it is determined to use the carrier aggregation, the eNB 40 may send, to the UE 50, information about the frequency band, the frequency width and the like to be used in the carrier aggregation.

After that, the eNB 40 sends an Initial Context Setup Complete message as a response message to the Initial Context Setup Request message (S25).

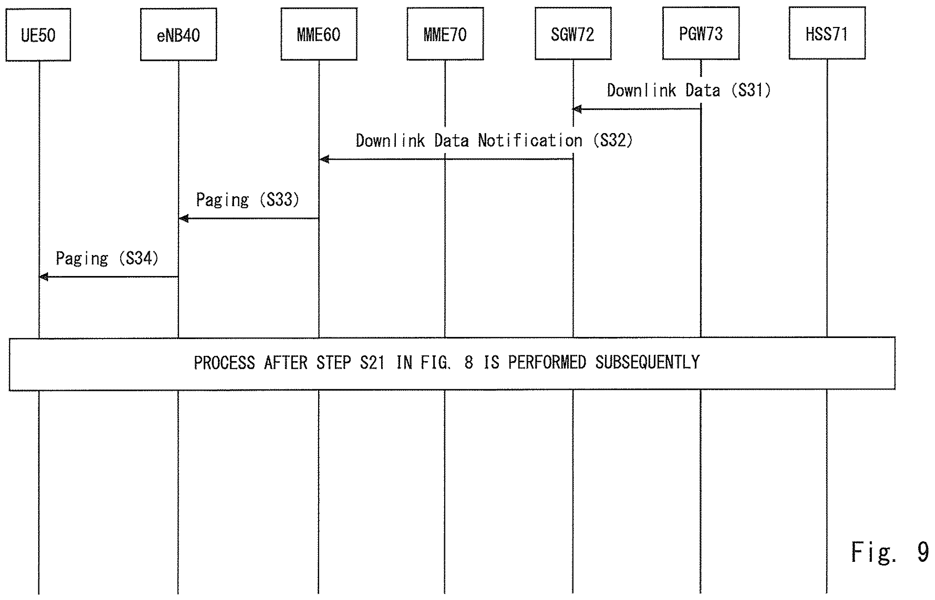

Hereinafter, the flow of a Network triggered Service Request process according to the third exemplary embodiment of the present invention is described hereinafter with reference to Fig. 9. The Network triggered Service Request process is performed when an incoming message is sent to the UE 50. First, the P-GW 73 sends, to the S-GW 72, Downlink Data that is addressed to the UE 50 (S31). Next, the S-GW 72 sends a Downlink Data Notification message to the MME 60 in order to notify the MME 60 that the Downlink Data addressed to the UE 50 has been sent (S32). Then, the MME 60 sends a Paging message to the eNB 40 (S33), and the eNB 40 performs a Paging process (S34). After the Paging process in Step S34, the process of Steps S21 to S25 in Fig. 8 is performed.

As described above, in the UE triggered Service Request process and the Network triggered Service Request process that are performed after the Attach process is completed also, the eNB 40 can determine whether the carrier aggregation is applicable or not in the same way as in the second exemplary embodiment.

### (Fourth Exemplary Embodiment)

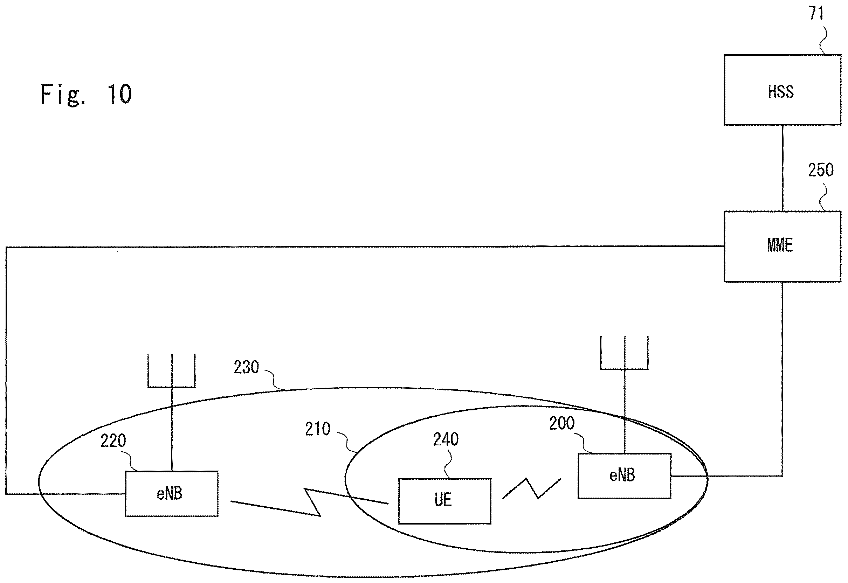

A configuration example of a communication system according to a fourth exemplary embodiment of the present invention is described hereinafter with reference to Fig. 10. The communication system in Fig. 10 includes an eNB 200, an eNB 220, a UE 240, an MME 250 and an HSS 71. The eNB 200 forms a cell 210. The eNB 220 forms a cell 230. The frequency band that is used in the cell 210 is different from the frequency band that is used in the cell 230. The UE 240 is located concurrently in the cell 210 and the cell 230. In other words, the UE 240 is located at the position where the cell 210 and the cell 230 overlap. Further, the MME 250 accommodates the eNB 200 and the eNB 220.

In the configuration of the communication system as shown in Fig. 10, the UE 240 may carry out the carrier aggregation by using the frequency band that is used in the cell 210 and the frequency band that is used in the cell 230.

Then MME 250 receives the subscriber information from the HSS 71 or the like, and it may then determine whether or not to apply the carrier aggregation to the UE 240 based on the received subscriber information, for example. Specifically, the MME 250 may include the determination unit 41 in the eNB 40.

For example, when the MME 250 determines to use the carrier aggregation in wireless communications with the UE 240 by using the subscriber information sent from the HSS 71, it may send an Initial Context Setup Request message to the eNB 200 and the eNB 220 that form cells where the UE 240 is located. The UE 240 may receive an RRC Connection Reconfiguration/ NAS:Attach Accept message that specifies a frequency to be used from both of the eNB 200 and the eNB 220. The UE 240 can thereby carry out the carrier aggregation by using the frequency band that is used in the cell 210 and the frequency band that is used in the cell 230.

As described above, the UE 240 can use the carrier aggregation by simultaneously communicating with a plurality of eNBs using different frequency bands, in addition to the case where one eNB uses a plurality of frequency bands. Further, the MME 250 can determine whether the carrier aggregation using a plurality of eNBs is applicable or not by using the subscriber information sent from the HSS 71.

### (Fifth Exemplary Embodiment)

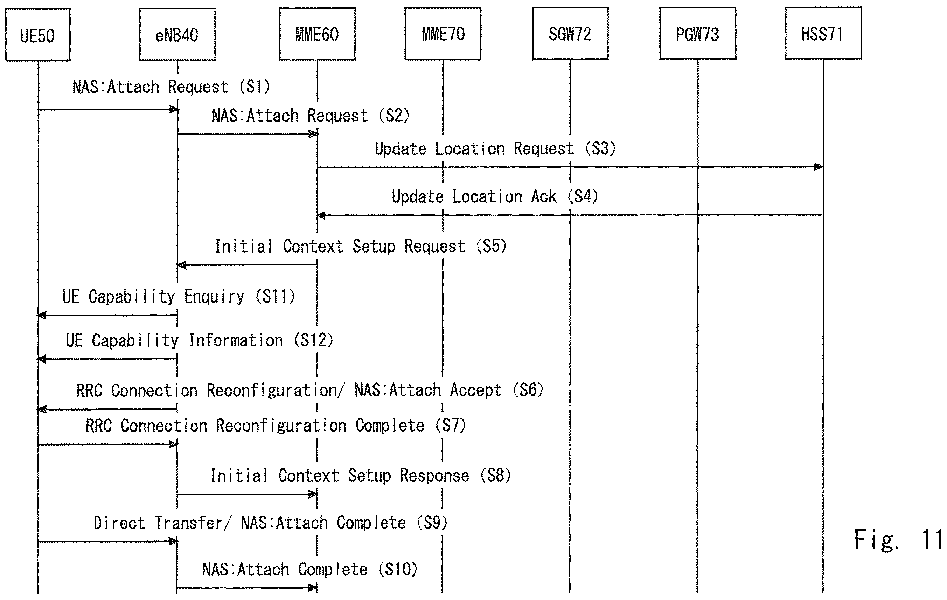

The flow of an Attach process according to a fifth exemplary embodiment of the present invention is described hereinafter with reference to Fig. 11. Fig. 11 shows the flow of a process where Step S11 and Step S12 are added between Step S5 and Step S6 in Fig. 5. In Fig. 11, the process which is common to that in Fig. 5 is not redundantly described.

In Step S11, the eNB 40 receives an Initial Context Setup Request message and then sets information to be used for determining whether the carrier aggregation is applicable or not to an arbitrary parameter of a UE Capability Enquiry message and sends it to the UE 50 (S11).

The UE 50 receives the UE Capability Enquiry message and determines whether or not to apply the carrier aggregation by using the information sent from the eNB 40 and sends, to the eNB 40, a UE Capability Information message that reflects the determination result as to whether or not to apply the carrier aggregation (S12). The eNB 40 receives the UE Capability Information message and sends, to the UE 50, an RRC Connection Reconfiguration/ NAS:Attach Accept message that reflects the determination result as to whether or not to apply the carrier aggregation (S6).

As described above, by performing the Attach process in Fig. 11, the UE 50 can make determination about whether or not to apply the carrier aggregation.

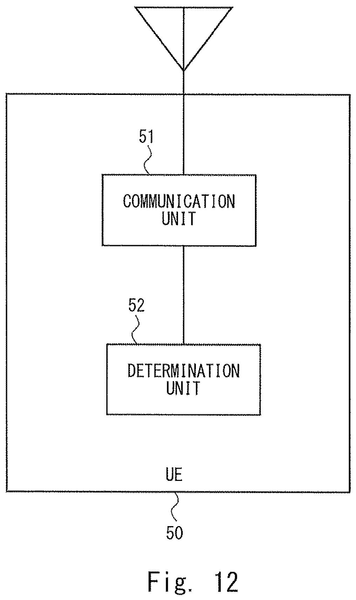

Further, the UE 50 that is used in the above-described exemplary embodiment may include a communication unit 51 and a determination unit 52 as shown in Fig. 12. The communication unit 51 receives information to be used for determining the frequency band to be used in wireless communications with the eNB 40. Further, by using the received information, the determination unit 52 determines whether or not to perform wireless communications with the eNB 40 by using two or more frequency bands.

Although the present invention is described as a hardware configuration in the above exemplary embodiments, the present invention is not limited thereto. The present invention may be implemented by causing a processor such as a CPU (Central Processing Unit) to execute a computer program to perform processing in the core network device (e.g., MME), the base station (e.g., eNB) and the mobile station (e.g., UE).

In the above example, the program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R , CD-R/W, DVD-ROM (Digital Versatile Disc Read Only Memory), DVD-R (DVD Recordable)), DVD-R DL (DVD-R Dual Layer)), DVD-RW (DVD ReWritable)), DVD-RAM), DVD+R), DVR+R DL), DVD+RW), BD-R (Blu-ray (registered trademark) Disc Recordable)), BD-RE (Blu-ray (registered trademark) Disc Rewritable)), BD-ROM), and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

It should be noted that the present invention is not limited to the above-described exemplary embodiments and may be varied in many ways within the scope of the present invention.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2015-048210 filed on March 11, 2015, the disclosure of which is incorporated herein in its entirety by reference.

### Reference Signs List

- 10: BASE STATION
- 20: MOBILE STATION
- 30: NETWORK DEVICE
- 40: eNB
- 41: DETERMINATION UNIT
- 42: COMMUNICATION UNIT
- 50: UE
- 51: COMMUNICATION UNIT
- 52: DETERMINATION UNIT
- 60: MME
- 61: SIGNAL GENERATION UNIT
- 62: COMMUNICATION UNIT
- 70: MME
- 71: HSS
- 72: S-GW
- 73: P-GW
- 100: CELL
- 110: CELL
- 200: eNB
- 210: CELL
- 220: eNB
- 230: CELL
- 240: UE
- 250: MME
The present application also includes the following numbered clauses:
1. A communication system comprising:
   a base station that wirelessly communicates with a mobile station by using at least one of a first frequency band and a second frequency band, the mobile station being located concurrently in a first cell using the first frequency band and a second cell using the second frequency band; and
   a network device that sends, to the base station, information to be used for determining a frequency band to be used in wireless communications with the mobile station.
2. The communication system according to Clause 1, wherein the network device sends, to the base station, subscriber information managed in a subscriber management device as the information to be used for determining a frequency band to be used.
3. The communication system according to Clause 2, wherein the subscriber information is information indicating whether the mobile station can perform wireless communications using a plurality of frequency bands.
4. The communication system according to Clause 2, wherein the subscriber information is information indicating a combination of frequency bands to be used in wireless communications with the mobile station.
5. The communication system according to Clause 4, wherein information about a combination of frequency bands to be used is set to SPID that defines a priority of a wireless communication method to be used.
6. The communication system according to any one of Clauses 2 to 5, wherein the network device receives, from the subscriber management device, an Update Location Ack message containing the subscriber information and sends, to the base station, an Initial Context Setup Request message to which the subscriber information is set.
7. The communication system according to Clause 1, wherein the base station determines whether or not to use the first and second frequency bands in accordance with service information used by the mobile station.
8. A network device comprising:
   communication means for sending, to a base station that wirelessly communicates with a mobile station by using at least one of a first frequency band and a second frequency band, the mobile station being located concurrently in a first cell using the first frequency band and a second cell using the second frequency band, information to be used for determining a frequency band to be used in wireless communications with the mobile station.
9. A base station that forms a first cell using a first frequency band and a second cell using a second frequency band, comprising:
   determination means for determining a frequency band to be used in communication with a mobile station located concurrently in the first cell and the second cell by using information, sent from a network device, to be used for determining a frequency band to be used in wireless communications with the mobile station.
10. A mobile station that is located concurrently in a first cell using a first frequency band and a second cell using a second frequency band and wirelessly communicates with a base station by using at least one of the first frequency band and the second frequency band, wherein
   the mobile station is configured to receive information to be used for determining a frequency band to be used in wireless communications with the base station and determine whether or not to use the first frequency band and the second frequency band by using the received information.
11. A frequency band control method comprising:
   sending, to a base station that wirelessly communicates with a mobile station by using at least one of a first frequency band and a second frequency band, the mobile station being located concurrently in a first cell using the first frequency band and a second cell using the second frequency band, information to be used for determining a frequency band to be used in wireless communications with the mobile station.
12. A frequency band determination method used in a base station that forms a first cell using a first frequency band and a second cell using a second frequency band, comprising:
   determining a frequency band to be used in communication with a mobile station located concurrently in the first cell and the second cell by using information, sent from a network device, to be used for determining a frequency band to be used in wireless communications with the mobile station.
13. A non-transitory computer readable medium storing a program comprising:
   sending, to a base station that wirelessly communicates with a mobile station by using at least one of a first frequency band and a second frequency band, the mobile station being located concurrently in a first cell using the first frequency band and a second cell using the second frequency band, information to be used for determining a frequency band to be used in wireless communications with the mobile station.
14. A non-transitory computer readable medium storing a program to perform a frequency band determination method used in a base station that forms a first cell using a first frequency band and a second cell using a second frequency band, the program comprising:
   determining a frequency band to be used in communication with a mobile station located concurrently in the first cell and the second cell by using information, sent from a network device, to be used for determining a frequency band to be used in wireless communications with the mobile station.

## Claims

1. A mobile device configured to communicate with a base station using a first frequency band, the mobile device comprising:
means for receiving, from the base station, a Radio Resource Control, RRC, Reconfiguration message including information indicating a second frequency band that has been checked as allowed for use by the mobile device to perform carrier aggregation; and
means for performing carrier aggregation with the first frequency band and the second frequency band.

2. A method for carrier aggregation performed by a mobile device configured to communicate with a base station using a first frequency band, the method comprising:
receiving, from the base station, a Radio Resource Control, RRC, Reconfiguration message including information indicating a second frequency band that has been checked as allowed for use by the mobile device to perform carrier aggregation; and
performing carrier aggregation with the first frequency band and the second frequency band.
